# EUROPÄISCHE PATENTSCHRIFT

(11) **EP 3 552 940 B1**
(45) Veröffentlichungstag und Bekanntmachung des Hinweises auf die Patenterteilung: **16.12.2020**
(21) Anmeldenummer: 19163439.3
(22) Anmeldetag: 18.03.2019
(51) Int. Cl.: B62K 21/14, B62K 21/20

(54) **LENKVORRICHTUNG EINES ZWEIRADS, INSBESONDERE EINES FAHRRADS MIT EINER VORBAUFEDERUNG**
STEERING DEVICE OF A TWO-WHEELED VEHICLE, IN PARTICULAR A BICYCLE WITH A FRONT SUSPENSION
DISPOSITIF DE DIRECTION D'UN DEUX-ROUES, EN PARTICULIER D'UNE BICYCLETTE DOTÉE D'UNE SUSPENSION AVANT

(30) Priorität: 20.03.2018 DE 102018002277
(43) Veröffentlichungstag der Anmeldung: 16.10.2019
(73) Patentinhaber: Jörn GmbH, 71336 Waiblingen (DE)
(72) Erfinder: Uhlig, Thomas, 73262 Reichenbach (DE)
(74) Vertreter: Liebl, Thomas

(56) Entgegenhaltungen:
- CZ-U1- 993
- DE-U1- 9 207 057
- DE-U1- 29 715 537

## Beschreibung

Die Erfindung betrifft eine Lenkvorrichtung eines Zweirads, insbesondere eines Fahrrads mit einer Vorbaufederung nach dem Oberbegriff des Anspruchs 1.

Eine allgemein bekannte Lenkvorrichtung eines Zweirads, insbesondere eines Fahrrads weist ein rahmenseitiges Steuerrohr auf, in dem ein Gabelschaft einer Vorderradgabel schwenkbar aufgenommen ist. Als Auszugsicherung und zur Einstellung eines Lagerspiels des Gabelschafts im Steuerrohr werden ein Gewindesteuersatz, bei dem ein Einstellring auf den Gabelschaft geschraubt ist oder alternativ ein gewindeloser Steuersatz mit einer Klemmmanschette verwendet. Bei Verwendung eines Gewindesteuersatzes endet der Gabelschaft an der Oberseite des Steuerrohrs, während bei einem gewindelosen Steuersatz der Gabelschaft nach oben aus dem Steuerrohr ragt, wo er gegebenenfalls unter Zwischenschaltung von Ringen als sogenannte Spacer mittels einer Klemmmanschette des Vorbaus gehalten wird.

Zur Erhöhung des Fahrkomforts sind bei einem Zweirad, insbesondere bei einem Fahrrad Federungssysteme für Vorbauten und/oder Sattelstützen und/oder Gabeln und/oder Hinterbauten allgemein bekannt. Gefederte Vorderradgabeln werden dabei meist als Teleskopgabeln ausgeführt und bestehen im Wesentlichen aus einer Gabelbrücke sowie Stand- bzw. Tauchrohren mit Federungs- und/oder Dämpfungselementen. Der Gabelschaft ist mittig auf der Gabelbrücke positioniert und schwenkbar im Lenkkopflager im Steuerrohr gelagert. Die Tauchrohre sind gegenüberliegend an der Gabelbrücke angeordnet und tauchen beim Überfahren von Fahrbahnunebenheiten und/oder Bremsmanövern in die zugeordneten Standrohre ein. Am unteren Ende der Standrohre liegt die Vorderradnabe und meist einseitig ein Bremskörper, beispielsweise eine Bremsscheibe für eine Vorderradbremse. Charakteristisch für eine solche Teleskopgabel ist der große Federweg, insbesondere bei Bremsverzögerungen, was nachteilig eine Verringerung des Nachlaufs und des Steuerwinkels zur Folge hat. Eine einseitige Montage der Vorderradbremse führt zudem nachteilig zu Verschränkungen in der Vorderradgabel beim Bremsen. Diese Eigenschaften führen zur Verringerung der Fahrstabilität und erhöhten zusätzlich den Verschleiß an den Gleitflächen der Stand- und Tauchrohre, sodass ein hoher Wartungsaufwand besteht.

Weiter bekannt ist eine grundsätzlich andere Art einer Vorbaufederung, bei der keine Teleskopgabel sondern eine Starrgabel verwendet wird und der Lenker mit seinem Vorbau bezüglich des Steuerrohrs beim Überfahren von Fahrbahnunebenheiten und/oder Bremsmanövern nachgiebig rückstellend gelagert ist. Dazu weist die Vorbaufederung eine Teleskopanordnung auf, bei der eine Vorbauanordnung aus einem vertikalen Vorbauschaft und einem horizontalen, den Lenker tragenden Vorbau besteht und der Vorbauschaft im Gabelschaft verdrehfest aufgenommen und federn abgestützt ist. Die Vorbauanordnung aus dem vertikalen Vorbauschaft und dem horizontalen Vorbau kann dabei einteilig oder zweiteilig ausgeführt sein. Dazu sind Ausführungsformen bekannt (EP 3 115 289 A1; DE 297 15 537 U2; CZ 993 U1), bei denen relativ komplizierte und aufwendige Anordnungen von Spiralfedern verwendet sind, die im Gabelschaft enthalten sind und die gegenüber der Umgebung abzudecken und abzudichten sind. Zudem ist der verfügbare Einbauraum für Federanordnungen im Gabelschaft nur sehr begrenzt, so dass der Gestaltungsfreiraum für die Anordnung mehrerer Spiralfedern nur sehr gering ist. Zudem ist es bekannt, anstelle einer Spiralfederanordnung im Gabelschaft einen Elastomerkörper anzuordnen, auf dem sich in einer Teleskopanordnung ein Vorbauschaft federn abstützt (FR 1.312.987).

Weiter ist eine gattungsgemäße Lenkvorrichtung eines Zweirads, insbesondere eines Fahrrads mit einer Vorbaufederung nach dem Oberbegriff des Anspruchs 1 bekannt (siehe Dokument DE9207057U1) mit einem rahmenseitigen Steuerrohr, in dem ein Gabelschaft einer Vorderradgabel schwenkbar aufgenommen ist, mit einem Gewindesteuersatz, bei dem ein Einstellring auf den Gabelschaft geschraubt ist oder alternativ mit einem gewindelosen Steuersatz mit einer Klemmmanschette jeweils zur Lagesicherung des Gabelschafts im Steuerrohr und zur Einstellung eines Lagerspiels. Die Vorbaufederung weist eine Teleskopanordnung auf, bei der ein Vorbauschaft einer Vorbauanordnung aus einem vertikalen Vorbauschaft und einem horizontalen Vorbau im Gabelschaft verdrehfest aufgenommen und federnd abgestützt ist. Für eine federnde Abstützung des Vorbaus zwischen dem Einstellring oder alternativ zwischen der Klemmmanschette und dem Vorbau ist ein Elastomer-Ringelement mit freien Umfangsflächen angeordnet ist, durch das der Vorbauschaft hindurch und weiter in den Gabelschaft geführt ist, so dass bei einer fahrbedingten Abstützkraft auf den Vorbau der Vorbauschaft in den Gabelschaft eintaucht, wobei das Elastomer-Ringelement rückstellend verformbar ist.

Aufgabe der Erfindung ist es, eine gattungsgemäße Lenkvorrichtung eines Zweirads, insbesondere eines Fahrrads mit einer Vorbaufederung durch eine einfache und funktionssichere Anordnung als Ausziehsicherung und zur Vorspannungseinstellung weiterzubilden.

Diese Aufgabe wird mit den Merkmalen des Anspruchs 1 gelöst.

Gemäß Anspruch 1 ist durch eine Bohrung im Vorbauschaft von oben her eine Schraube geführt, die in ein Ausfeder-Anschlagteil geschraubt ist, welches sich von unten her an einem ringförmigen Anschlag im Gabelschaft abstützt, wobei sich ein Schraubenkopf oben am Vorbau abstützt. Dieses Ausfeder-Anschlagteil hat die Funktion einer Ausziehsicherung für den Vorbauschaft nach oben. Zudem kann damit eine Vorspannung in Elastomer-Ringelement aufgebracht werden, die je nach Einschraubposition in ihrer Größe einstellbar ist. Damit kann das Ansprechverhalten der Vorbaufederung sowohl durch die Dimensionierung des Elastomer-Ringelements, hinsichtlich seiner Geometrie und des Elastomermaterials sowie durch die eingestellte Vorspannung angepasst und eingestellt werden.

Der Begriff "Elastomer" ist als Sammelbegriff für elastisch verformbare Materialien, insbesondere für Gummi, PUR oder ähnliche Materialien zu verstehen.

Das Elastomer-Ringelement kann nahezu verschleiß- und wartungsfrei sein, wobei die Durchführung des Vorbauschafts durch das Elastomer-Ringelement anliegend und dicht ausgeführt werden kann, so dass keine weiteren Abdichtmaßnahmen erforderlich sind. Durch die freien Umfangsflächen des Elastomer-Ringelements kann das Elastomermaterial beim Einfedern relativ frei verformen und an den Umfangsflächen ausbeulen, so dass für eine Auslegung relativ große Freiräume zur Verfügung stehen, insbesondere auch relativ große Federwege möglich sind. Die Federwege sind hier konstruktionsbedingt zwar geringer als bei geländegängigen Zweirädern als Mountainbikes mit Teleskop-Vorderradgabeln. Mit der demgegenüber hier einfacher aufgebauten Vorbaufederung soll dagegen eine Verbesserung des Fahrkomforts bei Zweirädern, insbesondere Fahrrädern erreicht werden, die auf relativ ebenen befestigten Fahrbahnen im Stadtbereich oder über Land gefahren werden. Ein Einsatzgebiet liegt bevorzugt auch bei Elektro-Fahrrädern, sogenannten E-Bikes, welche vergleichsweise durch den Elektroantrieb schwer sind und bei denen mit einer erfindungsgemäßen Vorbaufederung der Fahrkomfort merklich gesteigert werden kann.

Das Elastomer-Ringelement kann einfach aus Polyurethan als PUR-Ringdämpfer mit einer zylindrischen Grundform, gegebenenfalls mit umlaufenden Einbuchtungen ausgeführt sein. Auch das Ausfeder-Anschlagteil kann als Elastomerpuffer ausgebildet sein, bei dem insbesondere ein stabiler Kern mit Innengewinde eine Auflage aus Elastomermaterial aufweist.

Zweckmäßig weist das Elastomer-Ringelement eine obere und eine untere plane Stützfläche auf, wobei auch der Vorbau und der Einstellring oder alternativ die Klemmmanschette jeweils eine zugeordnete, etwa flächengleiche Stützfläche aufweisen.

In einer konkreten Ausgestaltung ist die verdrehfeste Teleskopanordnung dergestalt aufgebaut, dass der Vorbauschaft einen nicht kreisförmigen, vorzugsweise einen quadratischen Querschnitt als Vierkant-Schaft aufweist. Als Aufnahmekontur ist im Gabelschaft eine entsprechende rohrförmige Innenkontur fest vorhanden, in der der Vorbauschaft an Gleitflächen anliegend eintauchbar und längsverlagerbar ist. Damit kann vom Lenker über den Vorbau und den Vorbauschaft ein Lenkmoment auf den Gabelschaft, in Verbindung mit einer Längsverlagerung der Teleskopanordnung übertragen werden. Die rohrförmige Innenkontur mit den Gleitflächen wird vorzugsweise in einer Buchse zur Verfügung gestellt, die im Gabelschaft fest montiert, insbesondere verpresst oder verschraubt ist. Eine solche Buchse kann vorteilhaft in einer handelsüblichen Vorderradgabel als Erstausrüstung und gegebenenfalls auch als Nachrüstung montiert werden.

Für eine leichtgängige Führung sind die Gleitflächen in der rohrförmigen Innenkontur in einer besonders bevorzugten Weiterbildung durch Nadellager gebildet. Insbesondere sind bei einem quadratischen Querschnitt der rohrförmigen Innenkontur vier entsprechend quadratisch angeordnete Nadellager verwendet mit in Axialrichtung übereinander drehbar angeordneten Nadeln.

Die axiale Länge des Elastomer-Ringelements kann im nicht vorgespannten Zustand zwischen 10% bis 50%, vorzugsweise zwischen 20% bis 30% der Länge des Steuerrohrs betragen, womit einerseits fahrkomfortsteigernde Federwege erreichbar sind und zudem die Vorbaufederung das übliche gewohnte Erscheinungsbild des gesamten Zweirads nicht ungünstig verändert.

Wie bereits ausgeführt, ist die erfindungsgemäße Vorbaufederung sowohl in Verbindung mit einem Gewindesteuersatz oder alternativ mit einer Klemmmanschette, einem sogenannten Ahead-System einsetzbar. Bei einem üblichen, allgemein bekannten Ahead-System ist die Klemmmanschette Bestandteil des Vorbaus. In Verbindung mit der erfindungsgemäßen Vorbaufederung ist die Klemmmanschette dagegen ein separates Bauteil mit darüber angeordnetem Elastomer-Ringelement und kann gegebenenfalls nach oben als Adapter verlängert werden, dergestalt dass darin der Querschnitt des Gabelschafts (nicht der Gabelschaft) nach oben weitergeführt und dort, sowie gegebenenfalls im oberen Bereich des Gabelschafts die Teleskopanordnung mit verlagerbarem Vorbauschaft, den Gleitflächen, gegebenenfalls mit einer montierten Buchse und Nadellagern, und dem Ausziehanschlag ausgebildet ist. Das Elastomer-Ringelement ist dann zwischen dem Adapter als Verlängerung der Klemmmanschette und dem Vorbau angeordnet. Eine solche Adapterausführung ist besonders einfach und kostengünstig als Nachrüstbausatz verwendbar, bei dem ein Zweirad, insbesondere ein Fahrrad in einer Werkstatt oder im Do-it-yourself-Verfahren mit einer Vorbaufederung nachrüstbar ist.

Anhand einer Zeichnung werden Ausführungsformen der Erfindung näher erläutert.

Es zeigen:
- Figur 1: eine perspektivische Ansicht im Bereich eines rahmenseitigen Steuerrohrs eines Fahrrads mit einer Vorbaufederung,
- Figur 2: einen vertikalen Längsschnitt der Darstellung nach Figur 1,
- Figur 3: eine Explosionsdarstellung der Einzelteile,
- Figuren 4, 5, 6: Schnittdarstellungen der Montagereihenfolge,
- Figur 7: einem eingefederten Zustand der Vorbaufederung nach Figur 2, und
- Figur 8: eine Schnittdarstellung einer alternativen zweiten Ausführungsform.

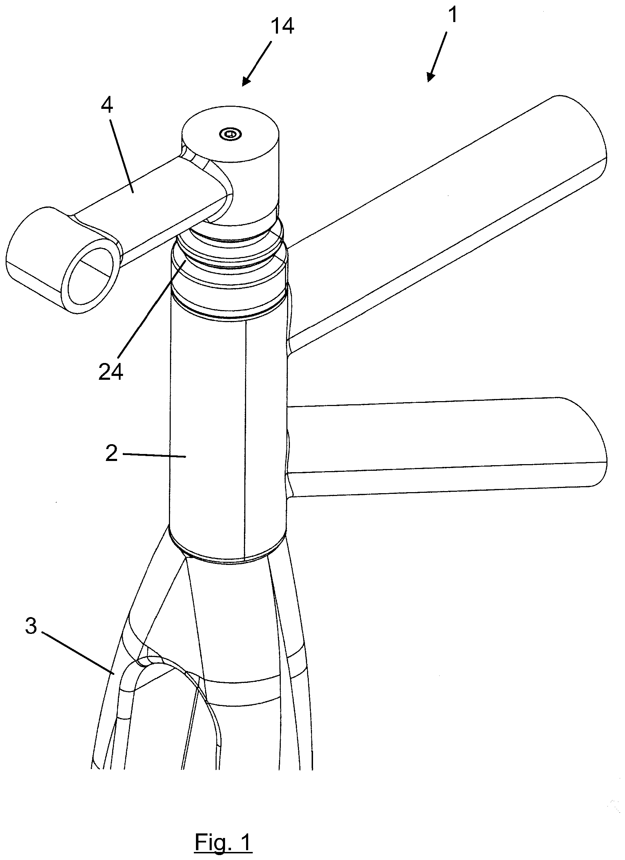

In Figur 1 ist die perspektivische Ansicht eines Fahrrads 1 im Bereich eines rahmenseitigen Steuerrohrs 2 dargestellt, mit einer im Steuerrohr 2 schwenkbar aufgenommenen Vorderradgabel 3 und einem Vorbau 4, wobei ein am Vorbau 4 montierbarer Lenker nicht dargestellt ist.

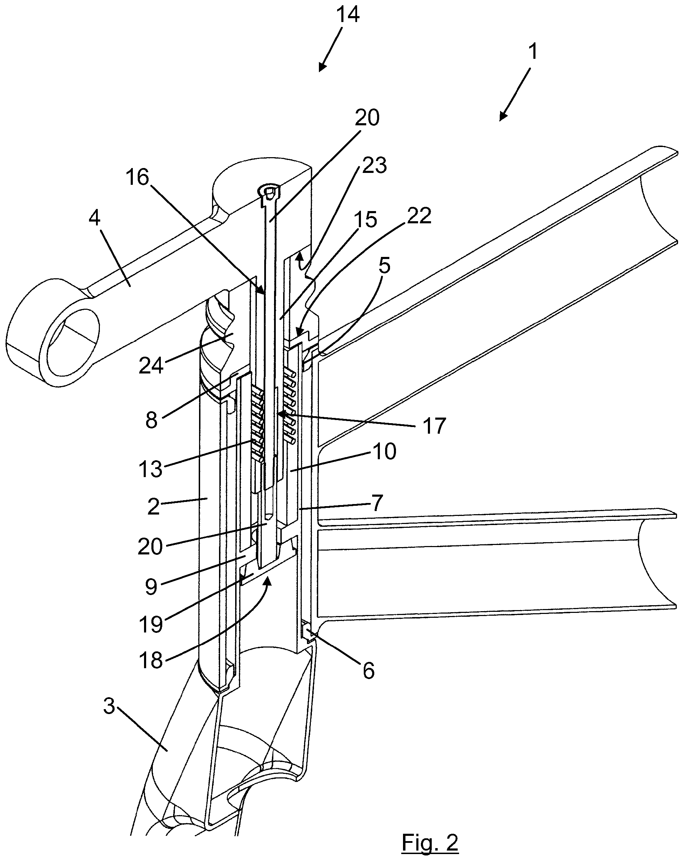

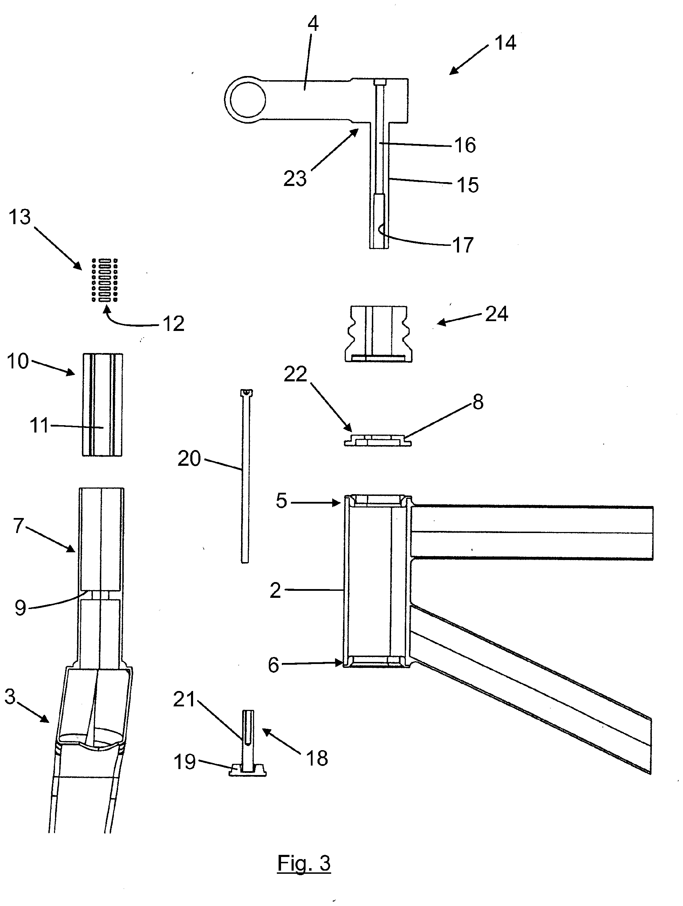

Anhand einer Schnittdarstellung nach Figur 2 einer komplett montierten Vorbaufederung sowie einer Explosionsdarstellung nach Figur 3 werden die verwendeten Einzelteile einer ersten Ausführungsform im Folgenden erläutert:
Im rahmenseitigen Steuerrohr 2 ist ein oberer Steuersatz 5 mit oberer Lagerschale und einem Klemmring sowie ein unterer Steuersatz 6 aufgenommen.

Ein Gabelschaft 7 einer Vorderradgabel 3 ist im Steuerrohr 2 bzw. im oberen und unteren Steuersatz 5, 6 schwenkbar aufgenommen, wobei ein Einstellring 8 mit Innengewinde auf den Gabelschaft 7 auf ein Außengegengewinde geschraubt ist (die Gewinde sind nicht im Detail dargestellt) und sich am Klemmring des oberen Steuersatzes 5 abstützt, wodurch eine Lagesicherung des Gabelschafts 7 im Steuerrohr 2 in Verbindung mit einer Einstellung eines Lagerspiels durchführbar ist. Bei dieser ersten Ausführungsform nach den Figuren 1 bis 6 handelt es sich somit um eine Ausführung mit einem Gewindesteuersatz, bei dem der Einstellring auf den Gabelschaft 7 geschraubt ist.

Im Gabelschaft 7 ist in einem mittleren Längsbereich ein ringförmiger Anschlag 9 mit einer axialen Bohrung hergestellt. Darüber liegend ist eine Buchse als Gleitbuchse 10 fest im Gabelschaft 7 montiert, insbesondere verpresst oder verschraubt. Die Gleitbuchse 10 hat dazu eine zylindrische Außenfläche sowie eine rohrförmige Innenkontur 11 mit quadratischem Querschnitt, an der Gleitflächen 12 durch vier eingesetzte Nadellager 13 ausgebildet sind.

Der Vorbau 4 ist Bestandteil einer Vorbauanordnung 14, die zudem einen vertikalen Vorbauschaft 15 mit einer der Innenkontur 11 zugeordneten 4-Kant-Außenkontur aufweist. Durch den Vorbauschaft 15 erstreckt sich eine Bohrung 16 mit einem im Durchmesser größeren unteren Bohrungserweiterung als Bolzenführung 17.

Von unten her ist in den Gabelschaft 7 ein Ausfederanschlagteil 18 eingeführt, welches sich mit einem Tellerteil 19, gegebenenfalls mit einer Elastomerauflage, am Anschlag 9 von unten hier im Gabelschaft 7 abstützt. Das Ausfederanschlagteil 18 wird mit einer langen Schraube 20 gehalten, welche von oben her durch die Bohrung 16 des Vorbauschafts gesteckt ist und in ein Innengewinde eines nach oben abstehenden Bolzens 21 des AusfederAnschlagteils 18 eingeschraubt ist, wobei der Bolzen 21 in die Bolzenführung 17 eingreift.

Zwischen dem Einstellring 8 mit einer oberen planen Stützfläche 22 und dem Vorbau mit einer unteren planen Stützfläche 23 ist mit entsprechenden Gegenflächen ein in seiner Grundform zylindrisches Elastomer-Ringelement 24 als PUR-Ringdämpfer, hier mit umlaufenden Ringnuten, eingesetzt, in dem je nach Einschraubposition mit der Schraube 20 eine Vorspannung aufbringbar ist.

Im Folgenden werden anhand von Schnittdarstellungen die einzelnen Montageschritte näher erläutert:

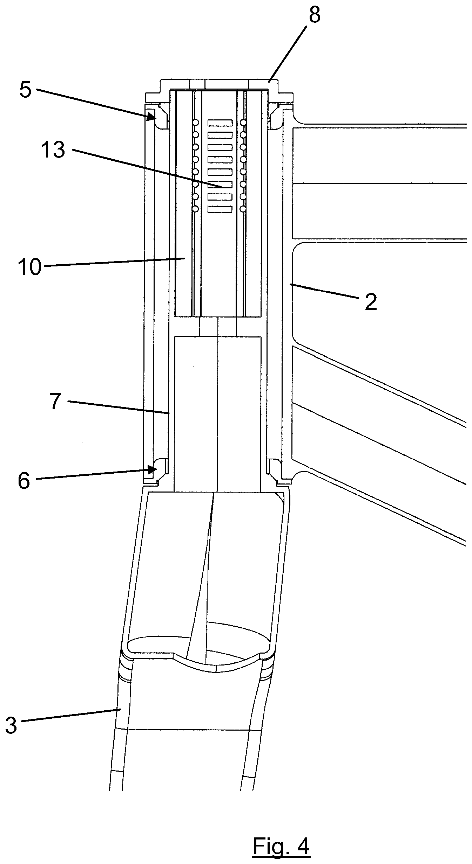

In Figur 4 ist bereits die Gleitbuchse 10 fest im Gabelschaft montiert. Weiter sind die Nadellager 13 zur Ausbildung einer Vierkant-Innenkontur in der Gleitbuchse 10 eingesetzt. Weiter ist der Einstellring 8 bereits oben auf den Gabelschaft 7 aufgeschraubt, wodurch der obere Steuersatz 5 und der untere Steuersatz 6 gegeneinander verspannt sind, so dass der Gabelschaft 7 gegen ein Herausrutschen nach unten gesichert und ein Lagerspiel eingestellt sind.

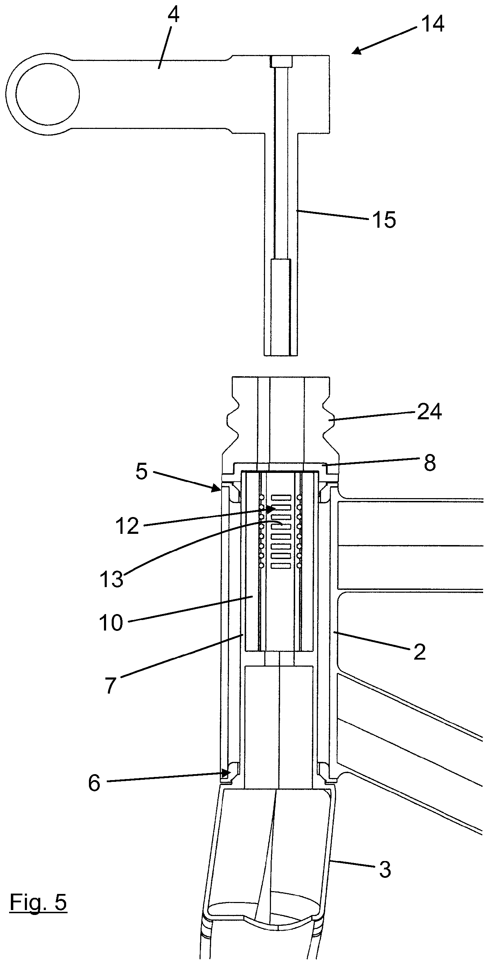

In Figur 5 ist weiter das Elastomer-Ringelement 24 auf den Einstellring 8 aufgesetzt. Zudem ist die Vorbauanordnung 14 mit ihrem Vorbauschaft 15 als Vierkantschaft bereit, durch das Elastomer-Ringelement 24 hindurch in die Gleitbuchse 10 mit ihren Gleitflächen 12 aus den Nadellagern 13 eingesteckt zu werden.

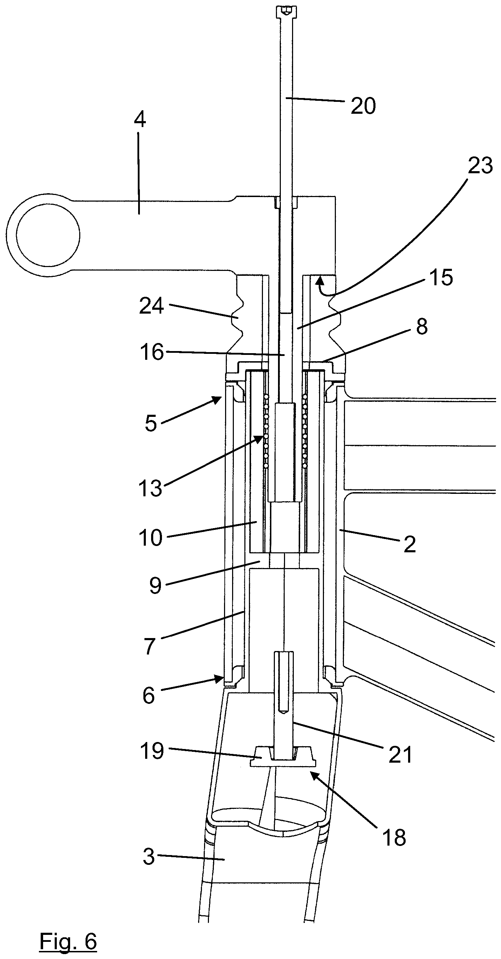

In Figur 6 ist der Vorbauschaft 15 bereits in die Gleitbuchse 10 eingesteckt und liegt mit einer unteren Stützfläche 23 oben auf dem Elastomer-Ringelement 24 auf. Nun wird von unten her das Ausfederanschlagteil 18 in den Gabelschaft 7 so weit eingeführt, bis sein Tellerteil 19 am Anschlag 9 von unten her anliegt, wobei der Bolzen 21 mit einem Innengewinde nach oben durch den Anschlag 9 hindurch absteht. Von oben her wird dann die lange Schraube 20 durch die Bohrung 16 hindurch nach unten eingeführt und mit einem Außengewinde in den Bolzen 21 des Ausfederanschlagteils 18 eingeschraubt, wobei der Bolzen 21 in die unteren Bolzenführung 17 des Vorbauschafts 15 eingreift. Die Schraube 20 wird nun so weit eingeschraubt, bis die Teile aneinander liegen und im Elastomer-Ringelement 24 gegebenenfalls eine Vorspannung aufgebaut ist. Damit ist die Montage der Vorbaufederung abgeschlossen und deren Grundstellung eingestellt, wie dies in Figur 2 gezeigt ist.

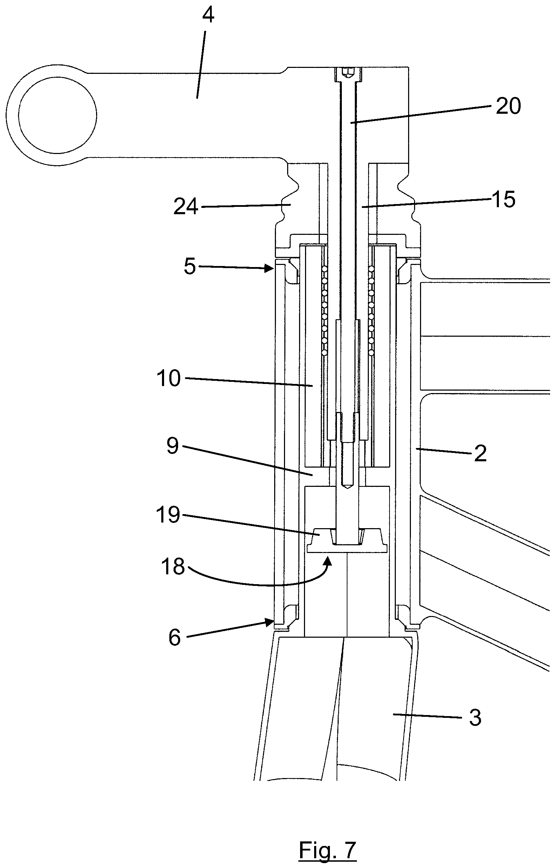

In Figur 7 ist ein eingefederter Zustand der Vorbaufederung dargestellt: durch eine fahrbedingte Kraft auf den (nicht dargestellten) Lenker und damit den Vorbau 4 wird dieser von oben her belastet, so dass der Vorbauschaft 15 in die Gleitbuchse 10 weiter eintaucht, wodurch das Elastomer-Ringelement 24 gestaucht und verformt wird. Zudem hebt das Tellerteil 19 des Ausfederanschlagteils 18 nach unten vom Anschlag 9 entsprechend dem Einfederweg ab. Damit ist eine von oben beispielsweise durch eine Fahrbahnunebenheit ausgelöste Kraftbelastung elastisch gedämpft abgefangen, was ersichtlich einen Fahrkomfort erhöht. Nach Beendigung der Krafteinwirkung erfolgt durch die rückstellende Wirkung des Elastomer-Ringelements 24 wieder eine Rückführung in die vorhergehende Grundstellung.

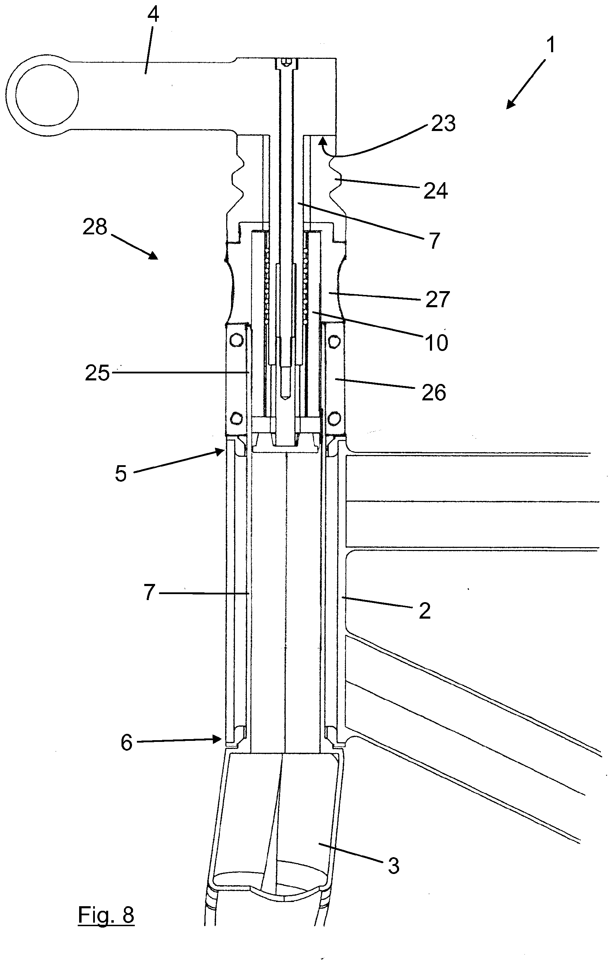

In Figur 8 ist eine zweite Ausführungsform in einer Schnittdarstellung gezeigt, bei der ein gewindeloser oberer Steuersatz 5 ohne einen Einstellring als sogenanntes Ahead-System eingesetzt ist. Dabei ragt der Gabelschaft 7 mit einem Überstand 25 nach oben über das Steuerrohr 2 ab. Dieser Überstand 25 wird von einer Klemmmanschette 26 umfasst. Nachdem die Klemmmanschette 26 am Überstand 25 festgeschraubt ist, ist der Gabelschaft 7 gegen ein Herausziehen nach unten gesichert und zudem kann das Lagerspiel eingestellt werden.

Zur Realisierung der erfindungsgemäßen Vorbaufederung kann das Elastomer-Ringelement 24 zwischen der Klemmmanschette 26 und der Stützfläche 23 des Vorbaus 4 eingesetzt werden, wobei die übrigen Teile entsprechend der ersten Ausführungsform im Gabelschaft 7, insbesondere im Überstand 25 angeordnet sein können.

In der in Figur 8 gezeigten Ausführungsform schließt sich jedoch an die Klemmmanschette 26 nach oben fest verbunden eine Verlängerung 27 zur Ausbildung eines Adapters 28 an, so dass die Bauteile für die Vorbaufederung, insbesondere die Gleitbuchse 10 und der darin eintauchende Gabelschaft 7 im Wesentlichen im Bereich des Adapters 28 angeordnet sind. Damit ist eine solche Vorbaufederung mit Adapter 28 besonders gut für die Ausrüstung/Nachrüstung eines üblichen Fahrrads mit einem Ahead-System geeignet.

## Patentansprüche

1. Lenkvorrichtung eines Zweirads, insbesondere eines Fahrrads mit einer Vorbaufederung,
mit einem rahmenseitigen Steuerrohr (2), in dem ein Gabelschaft (7) einer Vorderradgabel (3) schwenkbar aufgenommen ist,
mit einem Gewindesteuersatz, bei dem ein Einstellring (8) auf den Gabelschaft (7) geschraubt ist oder alternativ mit einem gewindelosen Steuersatz mit einer Klemmmanschette (26) jeweils zur Lagesicherung des Gabelschafts (7) im Steuerrohr (2) und zur Einstellung eines Lagerspiels, wobei
die Vorbaufederung eine Teleskopanordnung aufweist, bei der ein Vorbauschaft (15) einer Vorbauanordnung (14) aus einem vertikalen Vorbauschaft (15) und einem horizontalen Vorbau (4) im Gabelschaft (7) verdrehfest aufgenommen und federnd abgestützt ist,
wobei für eine federnde Abstützung des Vorbaus (4) zwischen dem Einstellring (8) oder alternativ zwischen der Klemmmanschette (26) und dem Vorbau (4) ein Elastomer-Ringelement (24) mit freien Umfangsflächen angeordnet ist, durch das der Vorbauschaft (15) hindurch und weiter in den Gabelschaft (7) geführt ist, so dass bei einer fahrbedingten Abstützkraft auf den Vorbau (4) der Vorbauschaft (15) in den Gabelschaft (7) eintaucht, wobei das Elastomer-Ringelement (24) rückstellend verformbar ist,
**dadurch gekennzeichnet, dass** durch eine Bohrung im Vorbauschaft (15) von oben her eine Schraube (20) geführt ist, die in ein Ausfeder-Anschlagteil (18) geschraubt ist, welches sich von unten her an einem ringförmigen Anschlag (9) im Gabelschaft (7) als Ausziehsicherung und zur Aufbringung einer einstellbaren Vorspannung auf das Elastomer-Ringelement (24) abstützt.

2. Lenkvorrichtung nach Anspruch 1, **dadurch gekennzeichnet, dass** das Elastomer-Ringelement (24) ein PUR-Ringdämpfer ist und/oder dass das Ausfeder-Anschlagteil (18) als Elastomerpuffer ausgebildet ist.

3. Lenkvorrichtung nach Anspruch 1 oder 2, **dadurch gekennzeichnet, dass** das Elastomer-Ringelement (24) eine obere und eine untere plane Stützfläche aufweist, und
dass der Vorbau und der Einstellring oder alternativ die Klemmmanschette jeweils eine zugeordnete etwa flächengleiche plane Stützfläche (22, 23) aufweisen.

4. Lenkvorrichtung nach einem der Ansprüche 1 bis 3, **dadurch gekennzeichnet,**
**dass** die verdrehfeste Teleskopanordnung dergestalt aufgebaut ist, dass der Vorbauschaft (15) einen nicht kreisförmigen, vorzugsweise einen quadratischen Querschnitt als Vierkant-Schaft aufweist, und
**dass** im Gabelschaft (7) eine entsprechende rohrförmige Innenkontur (11) fest vorhanden ist, in der der Vorbauschaft (15) an Gleitflächen (12) anliegend eintauchbar und längsverlagerbar ist.

5. Lenkvorrichtung nach Anspruch 4, **dadurch gekennzeichnet, dass** die rohrförmige Innenkontur mit den Gleitflächen (12), insbesondere mit quadratischem Querschnitt in einer Buchse als Gleitbuchse (10) hergestellt ist, die im Gabelschaft (7) fest montiert, insbesondere verpresst oder veschraubt ist.

6. Lenkvorrichtung nach Anspruch 4 oder 5, **dadurch gekennzeichnet, dass** die Gleitflächen (12) in der rohrförmigen Innenkontur (10) durch Nadellager (13) gebildet sind.

7. Lenkvorrichtung nach einem der Ansprüche 1 bis 6, **dadurch gekennzeichnet, dass** die axiale Länge des Elastomer-Ringelements (24) im nicht vorgespannten Zustand zwischen 10% bis 50%, vorzugsweise zwischen 20% bis 30% der Länge des Steuerrohrs (2) beträgt.

8. Lenkvorrichtung nach einem der Ansprüche 1 bis 7, **dadurch gekennzeichnet,**
**dass** bei einer Ausführungsform mit einem gewindelosen Steuersatz und einer Klemmmanschette (26), diese als Adapter (28) nach oben verlängert ist, dergestalt dass darin der Querschnitt des Gabelschafts (7) nach oben weitergeführt und dort sowie gegebenenfalls im oberen Bereich des Gabelschafts (7) die Teleskopanordnung mit verlagerbarem Vorbauschaft (15) mit den Gleitflächen (12) gegebenenfalls in einer montierten Buchse (10) mit Nadellagern (13) und dem Ausziehanschlag (9, 18) ausgebildet ist, und
**dass** das Elastomer-Ringelement (24) zwischen dem Adapter (28) und dem Vorbau (4) angeordnet ist.

## Claims

1. Steering device of a two-wheeled vehicle, in particular a bicycle with a handlebar stem suspension,
with a frame-side head tube (2), in which a fork stem (7) of a front wheel fork (3) is pivotably accommodated,
with a threaded headset, in which an adjustment ring (8) is screwed onto the fork stem (7), or alternatively with a threadless headset having a clamping sleeve (26) both for securing the position of the fork stem (7) in the head tube (2) and for setting a bearing play, wherein
the handlebar stem suspension comprises a telescopic arrangement, in which a handlebar stem shaft (15) of a handlebar stem arrangement (14) consisting of a vertical handlebar stem shaft (15) and a horizontal handlebar stem (4) is accommodated in a torsion-proof manner and supported resiliently in the fork stem (7),
wherein, for resiliently supporting the handlebar stem (4) between the setting ring (8) or alternatively between the clamping sleeve (26) and the handlebar stem (4), there is arranged an elastomer annular element (24) having free circumferential surfaces, through which elastomer annular element the handlebar stem shaft (15) is guided and led further into the fork stem (7) such that, in the event of a travel-induced supporting force on the handlebar stem (4), the handlebar stem shaft (15) dips into the fork stem (7), wherein the elastomer annular element (24) is deformable in a resetting manner,
**characterized in that** a screw (20) is guided from above through a bore in the handlebar stem shaft (15), the screw being screwed into a rebound stop part (18) which is supported from below on an annular stop (9) in the fork stem (7) as a pull-out lock and for applying an adjustable prestress on the elastomer annular element (24).

2. Steering device according to Claim 1, **characterized in that** the elastomer annular element (24) is a PUR annular damper, and/or **in that** the rebound stop part (18) is in the form of an elastomer buffer.

3. Steering device according to Claim 1 or 2, **characterized in that** the elastomer annular element (24) has an upper and a lower flat supporting surface, and
**in that** the handlebar stem and the setting ring or alternatively the clamping sleeve in each case have an associated flat supporting surface (22, 23) of approximately identical area.

4. Steering device according to one of Claims 1 to 3, **characterized in that** the torsion-proof telescopic arrangement is constructed in such a manner that the handlebar stem shaft (15) comprises a non-circular, preferably a square cross section in the form of a square shaft, and
**in that** in the fork stem (7) there is a corresponding tubular inner contour (11) in which the handlebar stem shaft (15), lying on sliding surfaces (12), can dip and be displaced longitudinally.

5. Steering device according to Claim 4, **characterized in that** the tubular inner contour is produced with sliding surfaces (12), in particular with a square cross section in a bushing as a sliding bushing (10) which is mounted fixedly, in particular pressed or screwed, in the fork stem (7).

6. Steering device according to Claim 4 or 5, **characterized in that** the sliding surfaces (12) in the tubular inner contour (10) are formed by needle bearings (13).

7. Steering device according to one of Claims 1 to 6, **characterized in that**, in the non-prestressed state, the axial length of the elastomer annular element (24) is between 10% to 50%, preferably between 20% to 30%, of the length of the head tube (2).

8. Steering device according to one of Claims 1 to 7, **characterized in that**, in an embodiment having a threadless headset and a clamping sleeve (26), the latter as an adapter (28) is extended upwards in such a manner that the cross section of the fork stem (7) is guided further upwards therein and there and optionally in the upper region of the fork stem (7) the telescopic arrangement having the displaceable handlebar stem shaft (15) with the sliding surfaces (12) is optionally formed in a fitted bushing (10) with needle bearings (13) and the pull-out stop (9, 18), and
**in that** the elastomer annular element (24) is arranged between the adapter (28) and the handlebar stem (4).

## Revendications

1. Dispositif de direction d'un deux-roues, en particulier d'une bicyclette pourvue d'une suspension à potence, ledit dispositif de direction comprenant un tube de commande côté cadre (2) dans lequel un arbre de fourche (7) d'une fourche de roue avant (3) est reçu de manière pivotante,
une unité de commande filetée dans laquelle une bague de réglage (8) est vissée sur l'arbre de fourche (7) ou en variante une unité de commande non-filetée pourvue d'un manchon de serrage (26) destiné à fixer la position de l'arbre de fourche (7) dans le tube de commande (2) et à régler un jeu de palier,
la suspension à potence comportant un ensemble télescopique dans lequel un arbre de potence (15) d'un ensemble de potence (14), pourvu d'un arbre de potence vertical (15) et d'une potence horizontale (4), est reçu de manière résistante à la torsion et est supporté élastiquement dans l'arbre de fourche (7),
un élément annulaire (24) en élastomère pourvu de surfaces circonférentielles libres étant disposé entre la bague de réglage (8) ou en variante le manchon de serrage (26) et la potence (4) pour supporter élastiquement la potence (4), l'arbre de potence (15) étant guidé à travers ledit élément annulaire jusque dans l'arbre de fourche (7) de sorte que, lorsqu'une force d'appui, due à l'entraînement, est exercée sur la potence (4), l'arbre de potence (15) pénètre dans l'arbre de fourche (7), l'élément annulaire (24) en élastomère étant déformable élastiquement,
**caractérisé en ce qu**'une vis (20) est guidée depuis le haut à travers un alésage ménagé dans l'arbre de potence (15) et est vissée dans une partie de butée de suspension (18) qui est en appui depuis le bas sur une butée annulaire (9) de l'arbre de fourche (7) en tant que protection anti-extraction et pour appliquer une précontrainte réglable sur l'élément annulaire (24) en élastomère.

2. Dispositif de direction selon la revendication 1, **caractérisé en ce que** l'élément annulaire (24) en élastomère est un amortisseur annulaire en PUR et/ou **en ce que** la partie de butée de suspension (18) est conçue comme un tampon en élastomère.

3. Dispositif de direction selon la revendication 1 ou 2, **caractérisé en ce que**
l'élément annulaire (24) en élastomère comporte des surfaces d'appui planes supérieure et inférieure, et
**en ce que** la potence et la bague de réglage ou, en variante le manchon de serrage, comporte chacun une surface d'appui plane associée (22, 23) à peu près de même surface.

4. Dispositif de direction selon l'une des revendications 1 à 3, **caractérisé en ce que**
l'ensemble télescopique résistant à la torsion est construit de telle manière que l'arbre de potence (15) présente une section transversale non circulaire, de préférence carrée, sous la forme d'un arbre carré, et
**en ce que** l'arbre de fourche (7) présente un contour intérieur tubulaire correspondant (11) dans lequel l'arbre de potence (15) pénètre et peut se déplacer longitudinalement en s'appuyant sur des surfaces de glissement (12).

5. Dispositif de direction selon la revendication 4, **caractérisé en ce que** le contour intérieur tubulaire pourvu des surfaces de glissement (12), notamment de section carrée, est réalisé dans une douille en forme de douille de glissement (10) qui est montée, notamment enfoncée ou vissée, de manière fixe dans le tube de direction (7).

6. Dispositif de direction selon la revendication 4 ou 5, **caractérisé en ce que** les surfaces de glissement (12) du contour intérieur tubulaire (10) sont formées par des roulements à aiguilles (13).

7. Dispositif de direction selon l'une des revendications 1 à 6, **caractérisé en ce que** la longueur axiale de l'élément annulaire (24) en élastomère à l'état non précontraint est comprise entre 10 % et 50 %, de préférence entre 20 % et 30 %, de la longueur du tube de commande (2).

8. Dispositif de direction selon l'une des revendications 1 à 7, **caractérisé en ce que**
dans un mode de réalisation comprenant une unité de commande non-filetée et un manchon de serrage (26), celui-ci est prolongé vers le haut sous la forme d'un adaptateur (28) de telle manière que la section transversale de l'arbre de fourche (7) soit prolongée vers le haut et là, éventuellement dans la région supérieure de l'arbre de fourche (7), l'ensemble télescopique pourvu d'un arbre de potence (15) pourvu des surfaces de glissement (12), soit formé éventuellement dans une douille montée (10), avec des roulements à aiguilles (13) et la butée d'extraction (9, 18), et
l'élément annulaire (24) en élastomère est disposé entre l'adaptateur (28) et la potence (4).
